# EUROPEAN PATENT APPLICATION

(11) **EP 1 772 993 A1**
(43) Date of publication of application: **11.04.2007**
(21) Application number: 06020837.8
(22) Date of filing: 04.10.2006
(51) Int. Cl.: H04L 12/26, H04L 29/06

(54) **Detecting anomalies internal to a network from traffic external to the network**

(30) Priority: 05.10.2005 US 244674
(71) Applicant: FUJITSU LIMITED, Kawasaki-shi, Kanagawa 211-8588 (JP)
(72) Inventor: Magnaghi, Antonio, Glendale CA 91202 (US); Hamada, Takeo, Cupertino CA 95014-5061 (US)
(74) Representative: HOFFMANN EITLE

(57) **Abstract**

Detecting anomalies includes receiving acceptable traffic from a network associated with a network party. The acceptable traffic is received at an anomaly detector associated with a monitoring party, where the anomaly detector is external to the network. The acceptable traffic is affected by an influencing interaction with anomalous traffic having anomalies. The influencing interaction yields an effect on the acceptable traffic, where the effect indicates the presence of the anomalies. Features of the acceptable traffic are monitored, where a monitored feature is operable to detect the effect. The anomalies are detected in response to the monitoring.

## Description

### TECHNICAL FIELD

This invention relates generally to the field of communications and more specifically to detecting anomalies internal to a network from traffic external to the network.

### BACKGROUND

Communication networks may communicate information in packets. In certain situations, anomalies may cause undesirable effects in the transmission of packets. Known anomaly detection may be used to detect anomalies. Known anomaly detection techniques, however, may be unsatisfactory in certain conditions. It is generally desirable to have satisfactory anomaly detection techniques in certain situations.

### SUMMARY OF THE DISCLOSURE

In accordance with the present invention, disadvantages and problems associated with previous techniques for detecting anomalies may be reduced or eliminated.

According to one embodiment of the present invention, detecting anomalies includes receiving acceptable traffic from a network associated with a network party. The acceptable traffic is received at an anomaly detector associated with a monitoring party, where the anomaly detector is external to the network. The acceptable traffic is affected by an influencing interaction with anomalous traffic having anomalies. The influencing interaction yields an effect on the acceptable traffic, where the effect indicates the presence of the anomalies. Features of the acceptable traffic are monitored, where a monitored feature is operable to detect the effect. The anomalies are detected in response to the monitoring.

Certain embodiments of the invention may provide one or more technical advantages. A technical advantage of one embodiment may be that anomalies may be detected without having access to the traffic that includes the anomalies. Instead, the anomalies may be detected from other traffic that has been affected by the traffic with the anomalies. Another technical advantage of one embodiment may be that different types of anomalies may be detected and identified. Different types of anomalies may be detected and identified by monitoring different features of traffic. Another technical advantage of one embodiment may be that an anomaly detector may be placed outside of a network in order to detect anomalies that occur inside of the network.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram of one embodiment of a network system that includes an anomaly detector operable to detect anomalies;
FIGURE 2 is a block diagram of one embodiment of an anomaly detector that may be used with the network system of FIGURE 1;
FIGURE 3 is a graph of example expected values for frequency modulation effect;
FIGURE 4 is a graph of example actual values for frequency modulation effect;
FIGURE 5 is a graph of example actual values for packet loss that may indicate a routing loop anomaly;
FIGURE 6 is a graph of example actual values for packet loss that may indicate a duplexity mismatch anomaly; and
FIGURE 7 is a flowchart of one embodiment of a method for detecting anomalies.

### DETAILED DESCRIPTION OF THE DRAWINGS

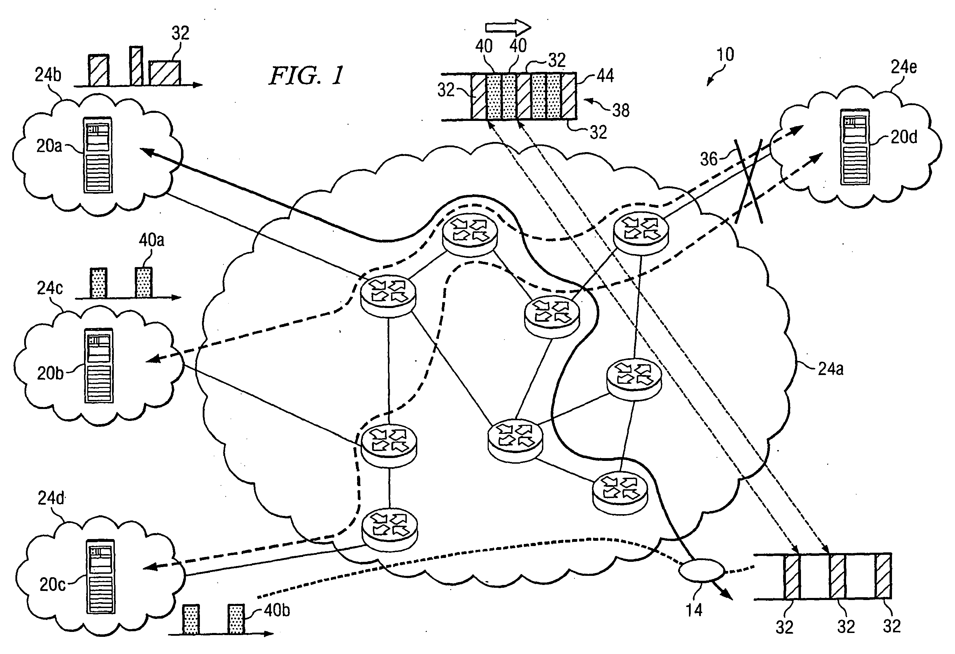

Embodiments of the present invention and its advantages are best understood by referring to FIGURES 1 through 7 of the drawings, like numerals being used for like and corresponding parts of the various drawings.

FIGURE 1 is a block diagram of one embodiment of a network system 10 that includes an anomaly detector 14. According to the embodiment, acceptable traffic may be affected by anomalous traffic having anomalies. Anomaly detector 14 may monitor features of the acceptable traffic to obtain actual values of the features. Anomaly detector 14 may then compare the actual values with expected values, and may detect the anomalies if there is a difference between the values.

According to the illustrated embodiment, network system 10 operates to provide services such as communication sessions to endpoints such as clients 20. A communication session may refer to an active communication between endpoints, measured from endpoint to endpoint. Information is communicated during a communication session. Information may refer to voice, data, text, audio, video, multimedia, control, signaling, other information, or any combination of the preceding. Network system 10 may communicate information in packets. A packet may comprise a bundle of data organized in a specific way for transmission, and a frame may comprise the payload of one or more packets organized in a specific way for transmission. A packet-based communication protocol such as Internet Protocol (IP) may be used to communicate the packets.

Network system 10 may utilize communication protocols and technologies to provide the communication sessions. Example communication protocols and technologies include those set by the Institute of Electrical and Electronics Engineers, Inc. (IEEE), International Telecommunications Union (ITU-T), European Telecommunications Standards Institute (ETSI), Internet Engineering Task Force (IETF), or other organization.

Network system 10 includes components such as devices. In general, a device may include any suitable arrangement of components operable to perform the operations of the device, and may comprise logic, an interface, memory, other component, or any suitable combination of the preceding. "Logic" may refer to hardware, software, other logic, or any suitable combination of the preceding. Certain logic may manage the operation of a device, and may comprise, for example, a processor. "Processor" may refer to any suitable device operable to execute instructions and manipulate data to perform operations.

"Interface" may refer to logic of a device operable to receive input for the device, send output from the device, perform suitable processing of the input or output or both, or any combination of the preceding, and may comprise one or more ports, conversion software, or both. "Memory" may refer to logic operable to store and facilitate retrieval of information, and may comprise Random Access Memory (RAM), Read Only Memory (ROM), a magnetic drive, a disk drive, a Compact Disk (CD) drive, a Digital Video Disk (DVD) drive, removable media storage, any other suitable data storage medium, or a combination of any of the preceding.

According to the illustrated embodiment, network system 10 includes one or more clients 20a-d, one or more networks 24a-e, and monitoring point 14 coupled as shown. According to one embodiment of operation, client 20a communicates acceptable traffic that includes acceptable packets 32. Traffic may refer to a packet flow of attempts, calls, messages, other types of packets, or any combination of the preceding. Acceptable traffic may refer to traffic that is considered satisfactory for communication. As an example, the traffic may satisfy requirements such as traffic requirements set by a service contract, a protocol, or a standard.

Client 20b and client 20c communicate with client 20d. An anomalous event 36 affects the communication between clients 20b-c and client 20d. An anomalous event may refer to an event that results in one or more anomalies. An anomaly may refer to a problem that renders acceptable traffic unacceptable. As a result of anomalous event 36, client 20b transmits anomalous traffic that includes anomalous packets 40a, and client 20c transmits anomalous traffic that includes anomalous packets 40b. Anomalous traffic may refer traffic that includes one or more anomalies.

The anomalous traffic affects the acceptable traffic at an influencing interaction 38. Influencing interaction 38 may refer to an interaction during which anomalous traffic affects acceptable traffic to yield an effect in the acceptable traffic that indicates the presence of an anomaly. The effect may be detected by anomaly detector 14. During influencing interaction 38, acceptable packets 32 and anomalous packets 40 are buffered at a shared buffer 44. After influencing interaction 38, acceptable packets 32 continue to anomaly detector 14. Anomaly detector 14 detects the anomalies caused by event 36 by detecting the effect resulting from influencing interaction 38 between acceptable packets 32 and anomalous packets 40.

According to the illustrated embodiment, clients 20a-d represent any suitable device operable to communicate information with a communication system. A client 20 may comprise, for example, a computer such as a laptop, a server, a database, a wireless device, a voice communication device such as a telephone, or any other device operable to communicate with network system 10.

Networks 24a-e represent communication networks that allow devices such as a client 20 to communicate with other devices. A communication network may comprise all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, other suitable communication link, or any combination of the preceding.

According to one embodiment, network 24a represents any suitable combination and arrangement of devices and transmission media supporting packet based communications. For example, network 24a may include any number of gateways, routers, switches, hubs, or repeaters interconnected to form an Ethernet subnet.

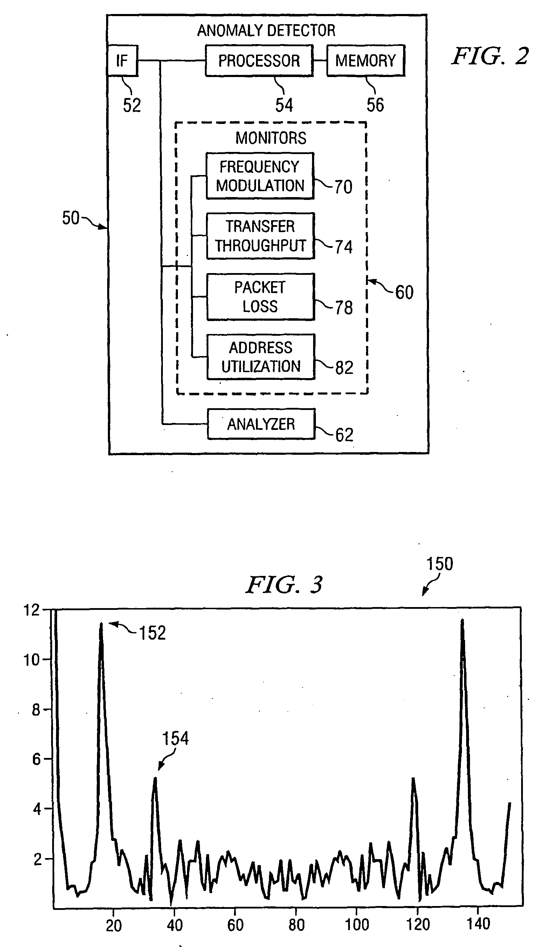

According to the embodiment, anomaly detector 14 monitors features of the acceptable traffic to obtain actual values of the features, and detects the anomalies in accordance with actual values. An anomaly detector is described in more detail with reference to FIGURE 2.

Any suitable anomaly may be detected. Example anomalies include routing loop, duplexity mismatch, and filtering misconfiguration anomalies. A routing loop anomaly may refer to a situation in which a packet is stuck in a loop and cannot reach its intended destination. A routing loop anomaly may cause packet loss, throughput reduction, endpoint-to-endpoint delay, retransmission time-out (RTO), other problem, or any combination of the preceding.

A duplexity mismatch anomaly may refer to a situation in which adjacent network devices that are coupled to the same physical communication medium operate according to incompatible media access control schemes. For example, one of the devices may operate in half duplex mode, while the other device may operate in full duplex mode. Half duplex mode may refer to communication defined by a carrier sense multiple access with collision detection (CSMA/CD) protocol as defined by the IEEE-802.3 standard. Full duplex mode may refer to dedicated, point-to-point channel communication as defined by the IEEE-802.3x standard. Duplexity mismatch may cause packet loss, throughput reduction, other problem, or any combination of the preceding. Moreover, the disruption of traffic may cause a ripple effect that affects higher level network layers.

A filtering misconfiguration anomaly may refer to a filtering process that mistakenly drops packets that should not be dropped. Filtering misconfiguration may cause packet loss, throughput reduction, endpoint-to-endpoint delay, other problem, or any combination of the preceding.

According to one embodiment, anomaly detector 14 may be placed external to network 24a to detect anomalies internal to network 24a. A detector placed external to network 24a may refer to a detector may receive only specific traffic from network 24a for monitoring purposes. An anomaly internal to network 24a may refer to an anomaly that originates from an anomalous event within network 24a.

According to the embodiment, a network party may operate network 24a, and a monitoring party may operate anomaly detector 14. A party may refer to a company, business, government agency, academic institution, or other organization. The network party may provide the monitoring party access to only specific traffic from network 24a for monitoring purposes. The monitoring party may use anomaly detector 14 to detect anomalies of anomalous traffic without having access to the anomalous traffic.

The monitoring party may provide the monitoring service to the network party in return for compensation paid by the network party to the monitoring party. The monitoring party may charge for the service in any suitable manner. As an example, the service may be charged in accordance with the amount of time that network 24a is monitored or the amount of packets that are monitored. As another example, the service may be charged in accordance with the type of anomalies detected and the features monitored.

One or more components of network system 10 may operate on one or more computers and may include appropriate input devices, output devices, mass storage media, processors, memory, or other components for receiving, processing, storing, and communicating information according to the operation of network system 10. As used in this document, the term "computer" refers to any suitable device operable to accept input, process the input according to predefined rules, and produce output.

Modifications, additions, or omissions may be made to network system 10 without departing from the scope of the invention. The components of network system 10 may be integrated or separated according to particular needs. Moreover, the operations of network system 10 may be performed by more, fewer, or other modules. Additionally, operations of network system 10 may be performed using any suitable logic. As used in this document, "each" refers to each member of a set or each member of a subset of a set.

FIGURE 2 is a block diagram of one embodiment of an anomaly detector 50 that may be used with the network system 10 of FIGURE 1. Anomaly detector 14 may monitor features of acceptable traffic to obtain actual values of the features, and detect anomalies in accordance with actual values. According to the embodiment, anomaly detector 14 may compare the actual values with expected values, and may detect the anomalies if there is a difference between the values.

According to the illustrated embodiment, anomaly detector 50 includes an interface (IF) 52, a processor 54, a memory 56, one or more monitors 60, and an analyzer 62 coupled as shown. According to one embodiment, anomaly detector 50 may comprise a transmission control protocol (TCP) monitoring point. Interface (IF) 52, processor 54, and memory 56 may be as described with reference to FIGURE 1.

A monitor 60 may refer to a device that operates to monitor a monitored feature to yield actual values. A monitored feature may refer to a feature that may be used to detect, identify, or both detect and identify an anomaly. Any suitable features may be monitored, for example, frequency modulation effect, transfer throughput, packet loss, address utilization, other feature, or any combination of the preceding.

According to the illustrated embodiment, monitors 60 include frequency modulation monitor 70, transfer throughput monitor 74, packet loss monitor 78, and address utilization monitor 82. Frequency modulation monitor 70 may refer to a monitor that monitors the frequency modulation effect of traffic. The frequency modulation may occur by the queuing process of routing loop traffic. According to one embodiment, frequency modulation monitor 70 may extract TCP traffic signals, represent the signals in the spectral domain by fast Fourier transforms, and then monitor the frequency modulation effect of the signals.

According to one example, expected values for frequency modulation effect may be generated from monitoring acceptable traffic. Example expected frequency modulation values are described in more detail with reference to FIGURE 3.

FIGURE 3 is a graph 150 of example expected values for frequency modulation effect. According to the example, expected frequency modulation values exhibit peaks 152 and 154 as illustrated. Graph 150 is presented as example expected values for frequency modulation effect. Other expected frequency modulation values, however, may be used.

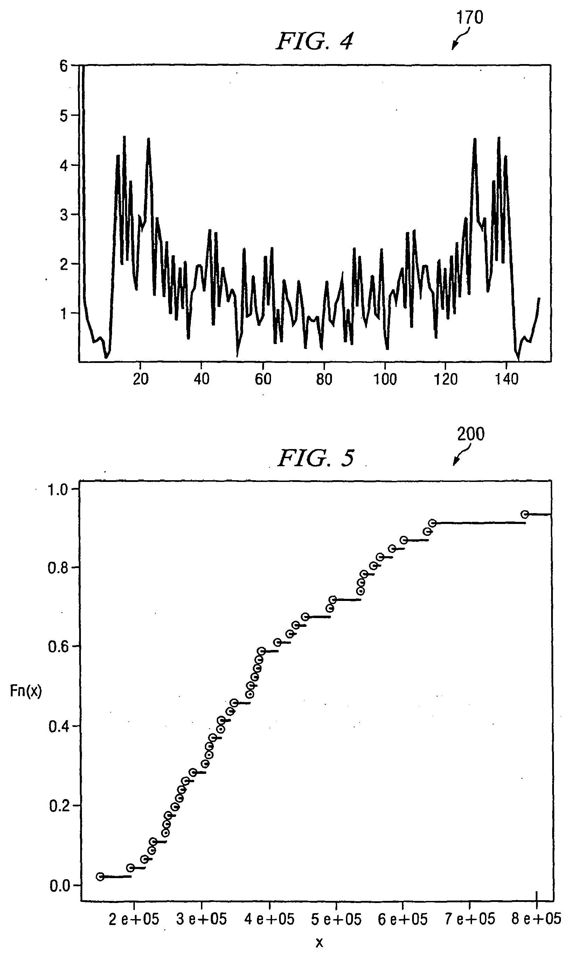

Referring back to FIGURE 2, actual values for frequency modulation effect may deviate from the expected values. Example actual frequency modulation values are described in more detail with reference to FIGURE 4.

FIGURE 4 is a graph 170 of example actual values for frequency modulation effect. According to the example, actual frequency modulation values do not exhibit peaks 152 and 154 as illustrated in FIGURE 3. Graph 170 is presented as example actual values for frequency modulation effect. Other values, however, may be obtained.

Referring back to FIGURE 2, transfer throughput monitor 74 monitors the transfer throughput of traffic. According to one embodiment, transfer throughput monitor 74 may extract TCP traffic and compute the average transfer throughput of the traffic. According to one example, expected values for transfer throughput may be generated from monitoring acceptable traffic. Actual transfer throughput values may deviate from the expected values. A lower transfer throughput may indicate routing loop or duplexity mismatch anomalies. A higher transfer throughput may indicate a filtering misconfiguration anomaly.

Packet loss monitor 78 may refer to a monitor that monitors packet loss. The packet loss may be used to generate a packet loss pattern that describes the packet loss over time. As an example, a packet loss pattern may describe the probability distribution of packet loss over time. According to one embodiment, packet loss monitor 78 may extract TCP traffic and monitor the timing between the loss events of the traffic.

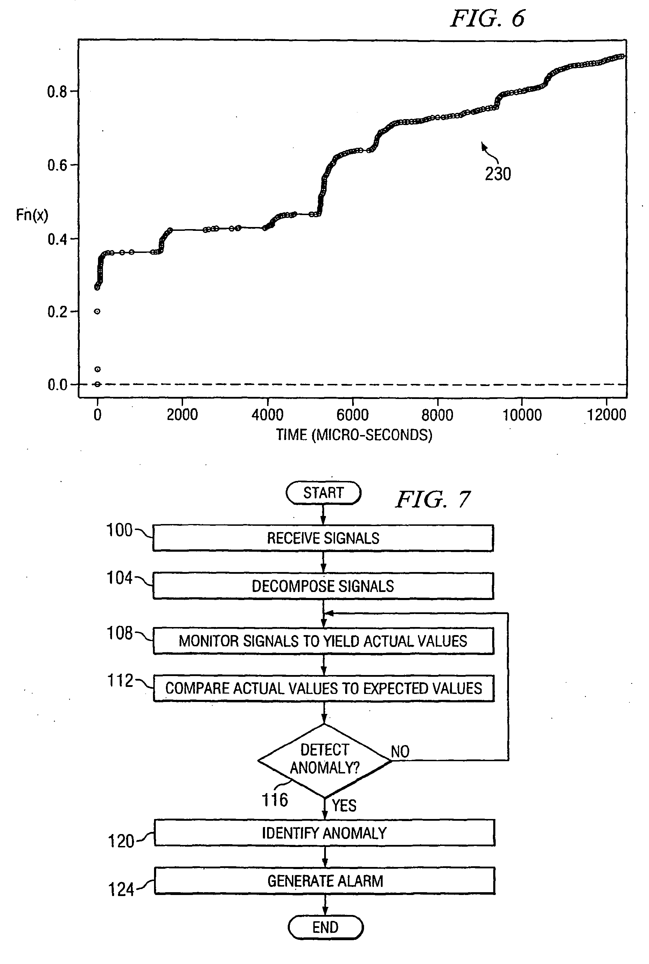

According to one example, expected values of a packet loss pattern may be generated from monitoring acceptable traffic that has acceptable packet loss due to, for example, congestion. According to the example, expected packet loss pattern values may conform to a Poisson distribution. Actual packet loss values may deviate from the expected values. Example actual packet loss values are described in more detail with reference to FIGURES 5 and 6.

FIGURE 5 is a graph 200 of example actual values for packet loss that may indicate a routing loop anomaly. According to the illustrated example, graph 200 illustrates the monitored cumulative distribution function (CDF) of inter-loss time by the probability of distribution of packet loss with respect to time. Graph 200 is presented as example actual values for packet loss. Other values, however, may be obtained.

FIGURE 6 is a graph 250 of example actual values for packet loss that may indicate a duplexity mismatch anomaly. According to the illustrated example, graph 250 illustrates the monitored cumulative distribution function (CDF) of inter-loss time by the probability of distribution of packet loss with respect to time. Graph 250 is presented as example actual values for packet loss. Other values, however, may be obtained.

Referring back to FIGURE 2, address utilization monitor 82 monitors the utilization of addresses such as source and destination addresses. According to one example, expected values for address utilization may be generated from monitoring acceptable traffic. Address utilization that deviates from the expected distribution may indicate an anomaly such as a filtering misconfiguration.

Analyzer 62 receives actual values from monitors 60, and compares the actual values with expected values. An expected value may refer to a value for a monitored feature of acceptable traffic. An expected value may be expressed in any suitable manner, such as an individual value or a range of values.

Differences between actual values and expected values may indicate the presence of an anomaly. A difference may be required to satisfy a threshold value in order to indicate an anomaly. The threshold value may take into account a sufficient level of confidence that an actual value indicates an anomaly. In addition, the threshold value for a first monitored feature may be dependent on the actual value of a second monitored feature. As an example, if the actual value for a first monitored feature satisfies a stricter threshold value, the actual value of the second monitored feature may only be required to satisfy a weaker threshold value.

One or more monitored features may be used to detect and identify one or more types of anomalies. According to one embodiment, frequency modulation effect, transfer throughput, and loss pattern features may be used to detect a routing loop anomaly. The transfer throughput and loss pattern features may be used to detect a duplexity mismatch anomaly. Transfer throughput and address utilization features may be used to detect a filtering misconfiguration anomaly.

Modifications, additions, or omissions may be made to anomaly detector 50 without departing from the scope of the invention. Interface 52, processor 54, memory 56, monitors 60, and analyzer 62 may be integrated or separated according to particular needs. For example, the present invention contemplates the functions of both processor 54 and memory 56 being provided using a single device. If processor 54 and memory 56 are separated, interface 20 may be coupled to processor 54 using a bus or other suitable link.

Moreover, the operations of anomaly detector 50 may be performed by more, fewer, or other modules. For example, the operations of transfer throughput monitor 74 and packet loss monitor 76 may be performed by one module, or the operations of analyzer 62 may be performed by more than one module. Additionally, operations of anomaly detector 50 may be performed using any suitable logic comprising software, hardware, other logic, or any suitable combination of the preceding.

FIGURE 7 is a flowchart of one embodiment of a method for detecting anomalies. The method begins at step 100, where signals are received. The signals may be collected using a transition control protocol (TCP) trace. The signals are decomposed at step 104. The signals may be decomposed into groups of signals that can be monitored for particular features. According to one example, the signals may be decomposed into loss event signals and loss free signals. Loss event signals may refer to signals that include packet loss events, and loss free signals may include signals that do not include packet loss events. Signals, however, may be decomposed to yield any suitable groups that may be readily analyzed.

The signals are monitored at step 108 to yield actual values for monitored features. A monitored feature may refer to a feature that may be used to detect, identify, or both detect and identify an anomaly. The actual values are compared with expected values for the monitored features at step 112. An expected value may refer to a value for a monitored feature of acceptable traffic.

An anomaly may be detected at step 116. Anomalies may be detected if there are differences between the actual and expected values. If an anomaly is not detected, the method returns to step 108, where the signals are monitored. If an anomaly is detected, the method proceeds to step 120, where the anomaly is identified. The anomaly may be identified according to the feature that was monitored. An alarm indicating the anomaly is generated at step 124. As an example, an alarm may notify a system operator of the identified anomaly. As another example, an alarm may activate specific actions to take in response to the identified anomaly, such as maintenance actions to be performed by a service provider to fulfill the obligations of a service contract. After generating the alarm, the method terminates.

Modifications, additions, or omissions may be made to the method without departing from the scope of the invention. The method may include more, fewer, or other steps. Additionally, steps may be performed in any suitable order without departing from the scope of the invention.

Certain embodiments of the invention may provide one or more technical advantages. A technical advantage of one embodiment may be that anomalies may be detected without having access to the traffic that includes the anomalies. Instead, the anomalies may be detected from other traffic that has been affected by the traffic with the anomalies. Another technical advantage of one embodiment may be that different types of anomalies may be detected and identified. Different types of anomalies may be detected and identified by monitoring different features of traffic. Another technical advantage of one embodiment may be that an anomaly detector may be placed outside of a network in order to detect anomalies that occur inside of the network.

While this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of this disclosure, as defined by the following claims.

## Claims

1. A method for detecting one or more anomalies, comprising:
receiving acceptable traffic from a network associated with a network party, the acceptable traffic received at an anomaly detector associated with a monitoring party, the anomaly detector external to the network, the acceptable traffic comprising a plurality of packets, the acceptable traffic affected by an influencing interaction with anomalous traffic, the anomalous traffic having one or more anomalies, the influencing interaction yielding an effect on the acceptable traffic, the effect indicating the presence of the one or more anomalies;
monitoring one or more monitored features of the acceptable traffic, a monitored feature operable to detect the effect; and
detecting the one or more anomalies in response to the monitoring.

2. The method of Claim 1, wherein the network party provides the monitoring party access only to the acceptable traffic.

3. The method of Claim 1, wherein the network party provides compensation to the monitoring party in return for detecting the one or more anomalies.

4. The method of Claim 1, wherein the one or more anomalies result from an anomalous event within the network.

5. The method of Claim 1, wherein:
monitoring the one or more monitored features of the acceptable traffic further comprises:
generating an actual value for each of the one or more monitored features to yield one or more actual values; and
detecting the one or more anomalies in response to the monitoring further comprises:
comparing the one or more actual values with one or more corresponding expected values, an actual value generated for a monitored feature corresponding to an expected value associated with the monitored feature;
determining at least one difference between at least one of the one or more actual values and at least one of the one or more corresponding expected values; and
detecting the one or more anomalies in response to the at least one difference.

6. The method of Claim 1, wherein the one or more anomalies further comprises at least one of:
a routing loop anomaly;
a duplexity mismatch anomaly; and
a filtering misconfiguration anomaly.

7. The method of Claim 1, wherein the one or more monitored features further comprises at least one of:
a frequency modulation distribution feature;
a transfer throughput feature;
a loss pattern feature; and
an address utilization feature.

8. An anomaly detector operable to detect one or more anomalies, comprising:
an interface operable to:
receive acceptable traffic from a network associated with a network party, the acceptable traffic received at an anomaly detector associated with a monitoring party, the anomaly detector external to the network, the acceptable traffic comprising a plurality of packets, the acceptable traffic affected by an influencing interaction with anomalous traffic, the anomalous traffic having one or more anomalies, the influencing interaction yielding an effect on the acceptable traffic, the effect indicating the presence of the one or more anomalies;
one or monitors coupled to the interface and operable to:
monitor one or more monitored features of the acceptable traffic, a monitored feature operable to detect the effect; and
an analyzer coupled to the one or monitors and operable to:
detect the one or more anomalies in response to the monitoring.

9. The anomaly detector of Claim 8, wherein the network party provides the monitoring party access only to the acceptable traffic.

10. The anomaly detector of Claim 8, wherein the network party provides compensation to the monitoring party in return for detecting the one or more anomalies.

11. The anomaly detector of Claim 8, wherein the one or more anomalies result from an anomalous event within the network.

12. The anomaly detector of Claim 8, wherein:
the one or monitors are further operable to monitor the one or more monitored features of the acceptable traffic by:
generating an actual value for each of the one or more monitored features to yield one or more actual values; and
the analyzer is further operable to detect the one or more anomalies in response to the monitoring by:
comparing the one or more actual values with one or more corresponding expected values, an actual value generated for a monitored feature corresponding to an expected value associated with the monitored feature;
determining at least one difference between at least one of the one or more actual values and at least one of the one or more corresponding expected values; and
detecting the one or more anomalies in response to the at least one difference.

13. The anomaly detector of Claim 8, wherein the one or more anomalies further comprises at least one of:
a routing loop anomaly;
a duplexity mismatch anomaly; and
a filtering misconfiguration anomaly.

14. The anomaly detector of Claim 8, wherein the one or more monitored features further comprises at least one of:
a frequency modulation distribution feature;
a transfer throughput feature;
a loss pattern feature; and
an address utilization feature.

15. Logic for detecting one or more anomalies, the logic encoded in a medium and operable to:
receive acceptable traffic from a network associated with a network party, the acceptable traffic received at an anomaly detector associated with a monitoring party, the anomaly detector external to the network, the acceptable traffic comprising a plurality of packets, the acceptable traffic affected by an influencing interaction with anomalous traffic, the anomalous traffic having one or more anomalies, the influencing interaction yielding an effect on the acceptable traffic, the effect indicating the presence of the one or more anomalies;
monitor one or more monitored features of the acceptable traffic, a monitored feature operable to detect the effect; and
detect the one or more anomalies in response to the monitoring.

16. The logic of Claim 15, wherein the network party provides the monitoring party access only to the acceptable traffic.

17. The logic of Claim 15, wherein the network party provides compensation to the monitoring party in return for detecting the one or more anomalies.

18. The logic of Claim 15, wherein the one or more anomalies result from an anomalous event within the network.

19. The logic of Claim 15, further operable to:
monitor the one or more monitored features of the acceptable traffic by:
generating an actual value for each of the one or more monitored features to yield one or more actual values; and
detect the one or more anomalies in response to the monitoring by:
comparing the one or more actual values with one or more corresponding expected values, an actual value generated for a monitored feature corresponding to an expected value associated with the monitored feature;
determining at least one difference between at least one of the one or more actual values and at least one of the one or more corresponding expected values; and
detecting the one or more anomalies in response to the at least one difference.

20. The logic of Claim 15, wherein the one or more anomalies further comprises at least one of:
a routing loop anomaly;
a duplexity mismatch anomaly; and
a filtering misconfiguration anomaly.

21. The logic of Claim 15, wherein the one or more monitored features further comprises at least one of:
a frequency modulation distribution feature;
a transfer throughput feature;
a loss pattern feature; and
an address utilization feature.

22. A system for detecting one or more anomalies, comprising:
means for receiving acceptable traffic from a network associated with a network party, the acceptable traffic received at an anomaly detector associated with a monitoring party, the anomaly detector external to the network, the acceptable traffic comprising a plurality of packets, the acceptable traffic affected by an influencing interaction with anomalous traffic, the anomalous traffic having one or more anomalies, the influencing interaction yielding an effect on the acceptable traffic, the effect indicating the presence of the one or more anomalies;
means for monitoring one or more monitored features of the acceptable traffic, a monitored feature operable to detect the effect; and
means for detecting the one or more anomalies in response to the monitoring.

23. A method for detecting one or more anomalies, comprising:
receiving acceptable traffic from a network associated with a network party, the acceptable traffic received at an anomaly detector associated with a monitoring party, the anomaly detector external to the network, the network party providing the monitoring party access only to the acceptable traffic, the acceptable traffic comprising a plurality of packets, the acceptable traffic affected by an influencing interaction with anomalous traffic, the anomalous traffic having one or more anomalies, the one or more anomalies resulting from an anomalous event within the network, the influencing interaction yielding an effect on the acceptable traffic, the effect indicating the presence of the one or more anomalies, the one or more anomalies further comprising at least one of:
a routing loop anomaly;
a duplexity mismatch anomaly; and
a filtering misconfiguration anomaly;
monitoring one or more monitored features of the acceptable traffic, a monitored feature operable to detect the effect, monitoring the one or more monitored features of the acceptable traffic further comprising:
generating an actual value for each of the one or more monitored features to yield one or more actual values, the one or more monitored features further comprising at least one of:
a frequency modulation distribution feature;
a transfer throughput feature;
a loss pattern feature; and
an address utilization feature; and
detecting the one or more anomalies in response to the monitoring, the network party providing compensation to the monitoring party in return for detecting the one or more anomalies, detecting the one or more anomalies in response to the monitoring further comprising:
comparing the one or more actual values with one or more corresponding expected values, an actual value generated for a monitored feature corresponding to an expected value associated with the monitored feature;
determining at least one difference between at least one of the one or more actual values and at least one of the one or more corresponding expected values; and
detecting the one or more anomalies in response to the at least one difference.
